# EUROPEAN PATENT APPLICATION

(11) **EP 1 641 004 A1**
(43) Date of publication of application: **29.03.2006**
(21) Application number: 04735973.2
(22) Date of filing: 03.06.2004
(51) Int. Cl.: H01G 9/04, C25F 3/04

(54) **METHOD FOR PRODUCING ALUMINUM MATERIAL FOR ELECTROLYTIC CAPACITOR ELECTRODE, ALUMINUM MATERIAL FOR ELECTROLYTIC CAPACITOR ELECTRODE, METHOD FOR PRODUCING ELECTRODE MATERIAL FOR ELECTROLYTIC CAPACITOR, AND ALUMINUM ELECTROLYTIC CAPACITOR**

(30) Priority: 03.06.2003 JP 2003157904
(71) Applicant: Showa Denko K.K., Tokyo 105-8518 (JP)
(72) Inventor: NISHIMORI, Hideki, Showa Denko K.K., Sakaishi, Osaka 590-0982 (JP); KODAMA, Kazuhiro, Showa Denko K.K., Sakaishi, Osaka 590-0982 (JP)
(74) Representative: Viering, Jentschura & Partner
(86) International application number: PCT/JP2004/008094
(87) International publication number: WO 2004/112065

(57) **Abstract**

The surface of a cold-rolled aluminum material is brought into contact with an aqueous acid solution, and then annealing is conducted under the conditions satisfying the following relationship between (x) and (y): 1.5 hours≦x≤8 hours and 450° C ≦y≦580° C; 8 hours≦x<10 hours and 450° C≦y≦(660-10x)°C; and 10 hours≦x and 450° C≦y≦560° C , wherein (x) is the duration time for which the aluminum material is kept at a certain temperature not less than 450°C and (y) is the annealing temperature at which the aluminum material is kept.

## Description

This application claims priority to Japanese Patent Application No. 2003-157904 filed on June 3, 2003, the entire disclosure of which is incorporated herein by reference in its entirety.

### Technical Field

The present invention relates to a method for producing an aluminum material for electrolytic capacitor electrodes, an aluminum material for electrolytic capacitor electrodes, a method for producing an electrode material for electrolytic capacitors, and an aluminum electrolytic capacitor.

In this description, the term "aluminum" is used as aluminum and alloys thereof, and aluminum material includes a foil, a plate, and products thereof.

### Background Art

Aluminum materials generally used as an electrode material for aluminum electrolytic capacitors are treated by an electrochemical or a chemical etching to expand the effective surface areas of the aluminum material in order to enhance a capacitance.

In producing aluminum materials for electrolytic capacitor electrodes, where tunnel- structured pits are generated by a direct current etching method, to grow (100) face crystal orientation, in general, an aluminum material is subjected to final annealing at around 500° C in an inert gas atmosphere or in vacuum. In addition, the final annealing takes place in a process later than finish cold rolling.

As characteristics of an oxide film of a surface layer of the aluminum material to be obtained through the final annealing have a great influence on subsequent etching characteristics, it is important how the aluminum surface layer is controlled by washing the aluminum material after rolling and before final annealing.

On the surface of a rolled aluminum material, parts that became exposed due to rolling are newly oxidized, and oil adheres thereto during rolling. Thus, the oxide film of the surface layer is unstable, and if the aluminum material annealed directly after rolling is subjected to electrolytic etching, etching unevenness may occur.

A possible method of preventing the etching unevenness is to wash the rolled aluminum material with an organic solvent or an alkali aqueous solution, after rolling and before final annealing it.

There is a problem, however, that an organic cleaning solvent cannot easily remove oil being adhered during rolling. In addition, although washing with an alkali aqueous solution can remove the adhered oil, the surface of aluminum after washing has a number of Al-OH groups, which causes poor stability of the film. Hence, in order to generate a film that is stabilized and has less aging, a treatment with acids or removal of an oxide film prior to the final annealing is now under consideration.

For example, Japanese Unexamined Laid-open Patent Publication No. 60-92489 discloses a method for producing aluminum foils for electrolytic capacitors wherein before and/or after cold rolling of a foil, the foil is treated with a cleaning liquid containing, as a main component, nitric acid. According to the method, the cleaning liquid containing, as a main component, nitric acid not only easily decomposes and removes the rolling oil adhered to the surface of the aluminum foil, but also forms a uniform passive oxide film that is stabilized and has less aging. This leads to generation of a thin oxide film in the following processes, and renders the etching effect substantial.

Japanese Unexamined Laid-open Patent Publication No. 5-279815 discloses a method for treating an aluminum foil for electrolytic capacitor anodes, wherein a surface of an aluminum foil for electrolytic capacitors is washed to remove an oxide film thereon, and then heated under an atmosphere of 150 to 400°C, wherein a method for removing the oxide film from the surface of the aluminum foil by washing it with an aqueous sodium hydroxide solution and then neutralizing it with an aqueous nitric acid solution is disclosed.

Japanese Unexamined Laid-open Patent Publication No. 63-86878 describes the method for producing an aluminum material for electrolytic capacitor electrode wherein a surface of an aluminum foil after rolling is annealed after being subjected to an adsorption treatment in which the surface is brought into contact with acids or compounds thereof that are highly adsorptive to aluminum, wherein nitric acid is exemplified as an acid to be used in the adsorption treatment.

As such, in Japanese Unexamined Laid-open Patent Publication No. 60-92489, Japanese Unexamined Laid-open Patent Publication No. 5-279815, and Japanese Unexamined Laid-open Patent Publication No. 63-86878, the methods for producing an aluminum material for electrolytic capacitor electrodes having a surface layer suitable for an electrolytic etching by bringing it into contact with an acidic aqueous solution prior to final annealing are reviewed.

In addition, since an aluminum material for electrolytic capacitor electrodes is annealed at high temperatures, annealing conditions substantially dictate characteristics of the surface of the aluminum material. It is known that particulates of crystalline oxide to be produced on the surface of the aluminum material during annealing act as an etch pit nucleation.

For instance, in a non-patent document, "Effects of Crystalline Oxides on Direct Current Etching Behavior of Aluminum Foil for Electrolytic Capacitor" by Nobuo Osawa and Kiyoshi Fukuoka, Surface Technology, Vol. 50, No.7, 1999, pp. 643 - 647," it is stated that formation of pits, with crystalline oxide as a core, is believed to suggest that there are a number of cracks in the periphery of crystals. In addition, it is believed that control of density or crystallinity of the particulates of the crystalline oxide contributes to enhancement of capacitance.

Although it seems that conditions of final annealing have a great impact on state of crystalline oxide generated and etching characteristics widely change, Patent Documents 1, 2, and 3 failed to enhance capacitance sufficiently, because they did not review a relationship between the annealing temperatures and annealing time, and the etching characteristics.

The present invention aims to solve the above problems associated with the treatment with an acidic aqueous solution prior to the final annealing and the annealing conditions in the conventional method for producing an aluminum material for electrolytic capacitor electrodes, and to provide a method for producing an aluminum material for electrolytic capacitor electrodes having better etching characteristics, an aluminum material for electrolytic capacitor electrodes, a method for producing an electrode material for electrolytic capacitors, and aluminum electrolytic capacitors.

### Disclosure of Invention

With the above aims, the method for producing an aluminum material for electrolytic capacitor electrodes of the present invention has the following structures as recited in Items (1) to (27).
(1) A method for producing an aluminum material for electrolytic capacitor electrodes wherein a surface of a cold-rolled aluminum material is brought into contact with an acidic aqueous solution, and then annealing is carried out under conditions satisfying the following relationship between (x) and (y): 450°C≦y≦580°C when 1.5 hours ≦x< 8 hours, 450°C≦y≦ (660-10x)° C when 8 hours ≦x<10 hours, and 450° C≦y≦560° C when 10 hours ≦x wherein x is an annealing duration time in which a constant temperature of not less than 450°C is maintained and y is an annealing temperature.
(2) The method for producing an aluminum material for an electrolytic capacitor electrodes as recited in the aforementioned Item 1, wherein the annealing is carried out under conditions satisfying 450° C≦y≦580° C when 1. 5 hours≦x<4.5 hours, 450° C≦y≦(625-10x)° C when 4.5 hours≦x<10 hours, and 450° C≦y≦ 525° C when 10 hours≦x.
(3) The method for producing an aluminum material for electrolytic capacitor electrodes as recited in the aforementioned Item 1, wherein the annealing is carried out under conditions satisfying 490° C≦y≦580° C when 1.5 hours≦x<4.5 hours, 490° C≦y≦ (625-10x)° C when 4.5 hours≦x<10 hours, and 490° C≦y≦ 525° C when 10 hours≦x≦22 hours.
(4) The method for producing an aluminum material for electrolytic capacitor electrodes as recited in any one of the aforementioned Items 1 to 3, wherein an acid contained in the acidic aqueous solution is at least one acid selected from the group consisting of nitric acid, sulfuric acid, hydrochloric acid, and acids including phosphorus.
(5) The method for producing an aluminum material for electrolytic capacitor electrodes as recited in any one of the aforementioned Items 1 to 4, wherein the annealing is carried out in an inert gas atmosphere.
(6) The method for producing an aluminum material for electrolytic capacitor electrodes as recited in any one of the aforementioned Items 1 to 5, wherein a concentration of the nitric acid in the acidic aqueous solution is not less than 0.0005 mass% and not more than 25 mass%.
(7) The method for producing an aluminum material for electrolytic capacitor electrodes as recited in the aforementioned Item 6, wherein a concentration of the nitric acid in the acidic aqueous solution is not less than 0.0005 mass% and not more than 4.7 mass%.
(8) The method for producing an aluminum material for electrolytic capacitor electrodes as recited in the aforementioned Item 7, wherein a concentration of the nitric acid in the acidic aqueous solution is not less than 1.2 mass% and not more than 4.7 mass%.
(9) The method for producing an aluminum material for electrolytic capacitor electrodes as recited in any one of the aforementioned Items 1 to 5, wherein a concentration of the sulfuric acid in the acidic aqueous solution is not less than 0 .0005 mass% and not more than 60 mass%.
(10) The method for producing an aluminum material for electrolytic capacitor electrodes as recited in the aforementioned Item 9, wherein a concentration of the sulfuric acid in the acidic aqueous solution is not less than 1.2 mass% and not more than 30 mass%.
(11) The method for producing an aluminum material for electrolytic capacitor electrodes as recited in the aforementioned Item 10, wherein a concentration of the sulfuric acid in the acidic aqueous solution is not less than 1.2 mass% and not more than 9.5 mass%.
(12) The method for producing an aluminum material for electrolytic capacitor electrodes as recited in any one of the aforementioned Items 1 to 5, wherein a concentration of the hydrochloric acid in the acidic aqueous solution is not less than 0.0005 mass% and not more than 30 mass%.
(13) The method for producing an aluminum material for electrolytic capacitor electrodes as recited in the aforementioned Item 12, wherein a concentration of the hydrochloric acid in the acidic aqueous solution is not less than 0.005 mass% and not more than 30 mass%.
(14) The method for producing an aluminum material for electrolytic capacitor electrodes as recited in the aforementioned Item 13, wherein a concentration of the hydrochloric acid in the acidic aqueous solution is not less than 1.2 mass% and not more than 9.5 mass%.
(15) The method for producing an aluminum material for electrolytic capacitor electrodes as recited in any one of the aforementioned Items 1 to 5, wherein the acid including phosphorus is orthophosphoric acid and a concentration thereof in the acidic aqueous solution is not less than 0.0005 mass% and not more than 30 mass%.
(16) The method for producing an aluminum material for electrolytic capacitor electrodes as recited in the aforementioned Item 15, wherein a concentration of the orthophosphoric acid in the acidic aqueous solution is not less than 1.2 mass% and not more than 30 mass%.
(17) The method for producing an aluminum material for electrolytic capacitor electrodes as recited in the aforementioned Item 16, wherein a concentration of the orthophosphoric acid in the acidic aqueous solution is not less than 1.2 mass% and not more than 9.5 mass%.
(18) The method for producing an aluminum material for electrolytic capacitor electrodes as recited in any one of the aforementioned Items 1 to 17, wherein a temperature of the acidic aqueous solution is 10° C or higher and 95° C or lower, and a contact time of the aluminum material with the acidic aqueous solution is not less than 0.2 second and not more than 10 minutes.
(19) The method for producing an aluminum material for electrolytic capacitor electrodes as recited in any one of the aforementioned Items 1 to 18, wherein the aluminum material is degreased after cold rolling and before contacting with the acidic aqueous solution.
(20) The method for producing an aluminum material for electrolytic capacitor electrodes as recited in the aforementioned Item 19, wherein the degreasing is carried out with an organic solvent.
(21) The method for producing an aluminum material for electrolytic capacitor electrodes as recited in the aforementioned Item 19 , wherein the degreasing is carried out with water containing a surfactant.
(22) The method for producing an aluminum material for electrolytic capacitor electrodes as recited in any one of the aforementioned Items 1 to 21, wherein the surface layer of the aluminum material is removed after cold rolling and before contacting with the acidic aqueous solution.
(23) The method for producing an aluminum material for electrolytic capacitor electrodes as recited in the aforementioned Item 22, wherein an amount of the surface layer removed is 5 to 200 nm per side of the aluminum material.
(24) The method for producing an aluminum material for electrolytic capacitor electrodes as recited in the aforementioned Item 23, wherein an amount of the surface layer removed is 5 to 150 nm per side of the aluminum material.
(25) The method for producing an aluminum material for electrolytic capacitor electrodes as recited in any one of the aforementioned Items 22 to 24, wherein the surface layer is removed with an alkali aqueous solution.
(26) The method for producing an aluminum material for electrolytic capacitor electrodes as recited in the aforementioned Item 25, wherein an alkali contained in the alkali aqueous solution is at least one alkali selected from the group consisting of sodium hydroxide, calcium hydroxide, potassium hydroxide, sodium o-silicate, sodium m-silicate, and trisodium phosphate.
(27) The method for producing an aluminum material for electrolytic capacitor electrodes as recited in any one of the aforementioned Items 1 to 26, wherein an aluminum purity is not less than 99.9 mass%.
   In addition, the aluminum material for electrolytic capacitor electrodes of the present invention has the following structures as recited in Items (28) and (29).
(28) An aluminum material for electrolytic capacitor electrodes produced by the production method as recited in any one of the aforementioned Items 1 to 27.
(29) The aluminum material for electrolytic capacitor electrodes as recited in the aforementioned Item 28, which is an anode material for medium or high voltages.
   In addition, a method for producing an electrode material for electrolytic capacitors of the present invention has the following structures as recited in Items (30) and (31).
(30) A method for producing an electrode material for electrolytic capacitors, wherein an aluminum material produced by the production method as recited in any one of the aforementioned Items 1 to 27 is subjected to etching.
(31) The method for producing an electrode material for electrolytic capacitors as recited in the aforementioned Item 29, wherein at least a part of etching is a direct current etching.
   In addition, an electrolytic capacitor of the present invention has the following structure as recited in Item (32).
(32) An aluminum electrolytic capacitor wherein as an electrode material, an aluminum electrode material produced by the production method as recited in the aforementioned Item 30 or 31 is used.

The method for producing an aluminum material for electrolytic capacitors of the present invention intends to moderately generate particulates of crystalline oxide that will act as etch pit nucleations on the surface of the aluminum material by bringing the cold-rolled surface of the aluminum material into contact with an acidic aqueous solution and then annealing it under predetermined conditions, and to expand the effective surface area of the aluminum material by subsequent etching, thus increasing capacitance.

With the reasons described below, the annealing temperature and annealing duration time shall be provided in the scope of the aforementioned Items 1, 2, and 3.

As annealing at a low annealing temperature produces less particulates of crystalline oxide, the present application specifies that the lower limit of the annealing temperature be 450°C. The aluminum material will adhere to each other if they are stacked and annealed at a too high temperature. Thus, the upper limit of the annealing temperature shall be 580°C. If the annealing duration time is too short, generation of particulates of crystalline oxide will be insufficient. Thus, the annealing duration time shall be specified to be not less than 1.5 hours. In addition, particulates of crystalline oxide are easily generated when the annealing temperature is high. If the annealing duration time is longer, the proportion of an area that crystalline oxide particulates are occupied in the surface of the aluminum material goes too high, and etching characteristics deteriorate more. Thus, the shorter annealing duration time would be desirable. On the other hand, if the annealing temperature is relatively low, the proportion of the area that crystalline oxide particulates are occupied in the surface of the aluminum material does not go too high even when the annealing duration time is long, thus enabling annealing for a long time. Therefore, a relationship between the annealing duration time (x) and the annealing temperature (y) shall be such specified that when the annealing duration time is shorter, the upper limit of the annealing temperature is set high, and when the annealing duration time is longer, the upper limit of the annealing temperature is set low so that too many particulates of crystalline oxide will not be generated.

As an acid contained in an acidic aqueous solution with which the surface of the aluminum material comes into contact, at least one acid selected from the group consisting of nitric acid, sulfuric acid, hydrochloric acid, and acids including phosphorus is desirable. As the acids including phosphorus, orthophosphoric acid (hereinafter referred to as phosphoric acid), pyrophosphoric acid, metaphosphoric acid, and polyphosphoric acid are preferable.

Nitric acid, sulfuric acid and acids containing phosphorus have the effect of stabilizing an oxide film of an aluminum surface layer, and uniformly dispersing etch pits in etching after annealing. In addition, hydrochloric acid has the effect of promoting formation of etch pits in etching following annealing, and of improving dispersibility by forming a number of pits on the whole surface of the aluminum material.

### Brief Description of Drawings

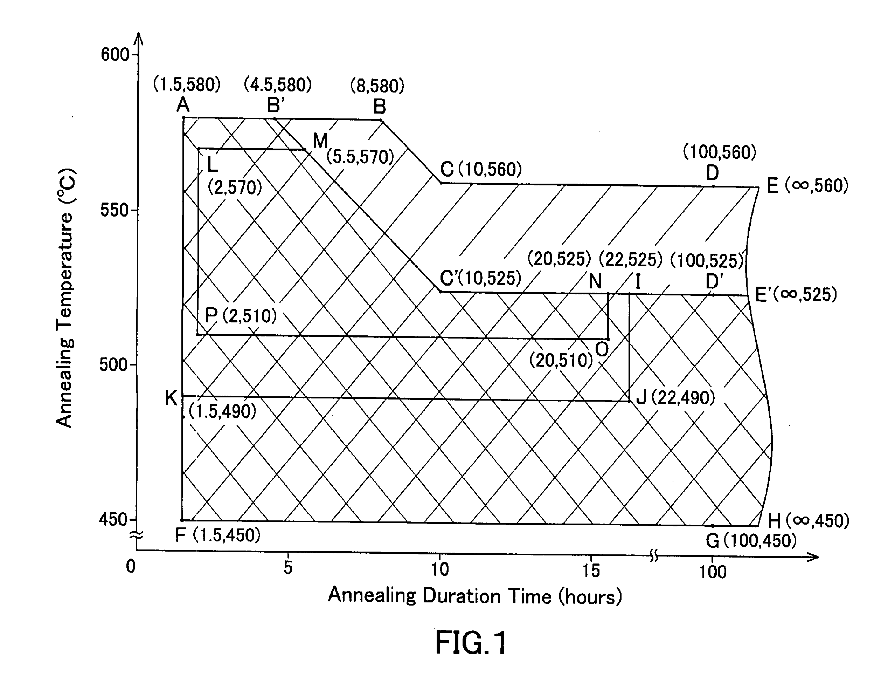

FIG. 1 is a graph showing annealing conditions specified in a method for producing an aluminum material for electrolytic capacitor electrodes of the present invention.

### Best Mode for Carrying Out the Invention

The method for producing an aluminum material for electrolytic capacitor electrodes of the present invention intends to moderately generate particulates of crystalline oxide that will act as an etch pit nucleation on the surface of the aluminum material by annealing it under predetermined conditions after bringing the cold-rolled surface of the aluminum material into contact with an acidic aqueous solution, and to expand the effective surface area of the aluminum material by subsequent etching, thus enhancing the capacitance.

In the following, the present invention will be described in detail along the producing processes of aluminum materials for electrolytic capacitor electrodes.

Although an aluminum material is not specifically defined as far as its purity falls within that for electrolytic capacitors, the aluminum material has preferably a purity of not less than 99.9 mass%, and, in particular, not less than 99.95 mass% would be preferable. In the present invention, the purity of aluminum material is determined by subtracting the total concentration (mass%) of Fe, Si, Cu, Mn, Cr, Zn, Ti and Ga from 100 mass%.

Producing for aluminum materials, in general, is conducted in the order of the following: adjustment of soluble components/slab casting of an aluminum material, soaking, hot rolling, cold rolling, intermediate annealing, finish cold rolling (rolling at a low rolling reduction), and final annealing. The aluminum material that was subjected to cold rolling (including finish cold rolling) shall be brought into contact with an acidic aqueous solution specified by the invention, and then annealed. It is recommended that the aluminum material come into contact with the acidic aqueous solution after cold rolling. Thus, although it is recommended that annealing following it be final annealing, the present invention shall not preclude the possibility of coming into contact with acids prior to annealing other than the final annealing.

In addition, no limit is set to any production process and process conditions other than those specified by the present invention, and they shall be conducted according to any conventional method. In addition, conditions of the production processes of the aluminum materials are modified as appropriate, depending on the etching conditions of the aluminum material. Now, an intermediate annealing process is designed to take place during the course of a cold rolling process, for further growing (100) face crystal orientation after final annealing. In addition, washing may take place in a process earlier than intermediate annealing, in order to remove any impurities or oil on the aluminum surface. Although, in particular, no limit is set to a cleaning liquid to be used in processes prior to intermediate annealing, an alkali aqueous solution, an acidic aqueous solution, an organic solvent, etc. may be used.

### [Contact with an Acidic Aqueous Solution]

As an acid to be contained in an acidic aqueous solution with which the surface of the aluminum material is brought into contact, one or more acids may be selected from the group consisting of nitric acid, sulfuric acid, hydrochloric acid, and acids including phosphorus.

As the acids including phosphorus, phosphoric acid, pyrophosphoric acid, metaphosphoric acid, and polyphosphoric acid may be used.

Nitric acid, sulfuric acid and acids containing phosphorus have the effect of stabilizing an oxide film of the aluminum surface layer, and uniformly dispersing etch pits in etching after annealing. In addition, hydrochloric acid has the effect of promoting formation of etch pits in etching following annealing, and improving dispersibility by forming a number of pits on the whole surface of aluminum material.

Although the present invention shall not specifically define concentrations of these acids in an acidic aqueous solution, the following concentrations are recommended.

If the concentration of nitric acid, sulfuric acid or phosphoric acid is too low, stability of an oxide film of an aluminum surface layer will be inadequate, which will be thus less effective in improving capacitance. If the concentration is too high, many nitric acid ions, sulfuric acid ions, or phosphoric acid ions may remain on the aluminum surface even though it is washed with water after having contact with an acidic aqueous solution. Thus, the oxide film of the surface layer to be obtained by subsequent annealing is likely to be heterogeneous. For these reasons, a preferable concentration range of nitric acid is not less than 0.0005 mass% and not more than 25 mass%. A more preferable range would be not less than 0.0005 mass% and not more than 4.7 mass%. Particularly, a range of not less than 1.2 mass% and not more than 4.7 mass% would be preferable. A preferable concentration range of sulfuric acid would be not less than 0.0005 mass% and not more than 60 mass%. A more preferable range would be not less than 1. 2 mass% and not more than 30 mass%. Particularly, a range of not less than 1.2 mass% and not more than 9.5 mass% would be preferable. A preferable concentration range of phosphoric acid would be not less than 0.0005 mass% and not more than 30 mass%. A more preferable range would be not less than 1.2 mass% and not more than 30 mass%. Particularly, a range of not less than 1. 2 mass% and not more than 9.5 mass% would be preferable.

If the concentration of hydrochloric acid is too low, the effect of promoting pit formation in etching of the aluminum material to be obtained by subsequent annealing will be small. If the concentration is too high, the aluminum material dissoleves heterogeneously, thus lowering the pit dispersibility in etching of the aluminum material that will be obtained by subsequent annealing. A preferable concentration range of hydrochloric acid would be not less than 0.0005 mass% and not more than 30 mass%. A more preferable range would be not less than 0.005 mass% and not more than 30 mass%. Particularly, a range of not less than 1.2 mass% and not more than 9.5 mass% would be preferable.

Although a liquid temperature of the acidic aqueous solution is not specifically defined, it is preferably 10° C or higher and 95° C or lower. If the liquid temperature is lower than 10° C, the effect of improving capacitance due to pit dispersibility shall be inadequate. Even though liquid having a liquid temperature of 95° C or higher is used, it does not enhance the capacitance more than liquid having a liquid temperature of 10° C or higher and 95° C or lower, and lead to increased cost due to energy consumption. A more preferable liquid temperature is 10 to 85°C, particularly preferably, it is 20 to 70°C. Also, a contact time of the aluminum material with the acidic aqueous solution is not specifically defined, it is preferably not less than 0.2 second and not more than 10 minutes, more preferably not less than 0.5 second and not more than 5 minutes. If the contact time is less than 0.2 second, the effect of enhancing capacitance will be small. Even when the aluminum material is subjected to come in contact for longer than 10 minutes, the effect of enhancing the capacitance will not be improved, and productivity will be lowered due to processing for extended period of time.

In addition, organic carboxylic acids and organic sulfonic acids may be used as an acid contained in the acidic aqueous solution with which the surface of the aluminum material is brought into contact.

Although a method for bringing the aluminum material into contact with the acidic aqueous solution is not specifically defined, immersion, contact of the aluminum material with an aqueous solution, spraying, etc. may be possible.

### [Pre-processing before Contact with Acidic Aqueous Solution]

It is preferable that the aluminum material that has undergone a cold rolling process is improved its surface condition by carrying out degreasing or removal of the surface layer before coming into contact with an acidic aqueous solution. Degreasing removes oil adhered to the surface of the aluminum material, ensuring that a stabilized and homogeneous surface oxide film will be formed by subsequent contact with the acidic aqueous solution and annealing, thus enabling better dispersibility of etch pits. Removal of the surface layer of the aluminum material also removes any contaminated layer or heterogeneous oxide film after cold rolling. Then, subsequent contact with the acidic aqueous solution and annealing ensures formation of a stabilized and homogeneous oxide film of the surface layer, thus enabling better dispersibility of etch pits. In the following, methods for degreasing and removing a surface layer will be described in detail.

### [Degreasing]

As a method of degreasing, a method of washing the aluminum material with an organic solvent or water containing a surfactant or a method of bringing the aluminum material that has undergone rolling into contact with a heating body such as a heat roll can be exemplified.

Although the organic solvent is not specifically defined, by way of example, it may be alcohol, diol, aromatic hydrocarbons such as toluene, xylene, etc., alkane hydrocarbons, cyclohexane, ketone, ether, ester, petrochemical products, etc.

Further specific examples of the alcohol mentioned above include methanol (CH₃OH), ethanol (C₂H₅OH), 1-propanol(CH₃CH₂CH₂OH), 2-propanol(CH₃CH₂(OH)CH₃), 1-butanol(CH₃CH₂CH₂CH₂OH), 2-butanol (CH₃CH₂CH₂(OH)CH₃), 1-pentanol (CH₃CH₂CH₂CH₂CH₂OH), 2-pentanol (CH₃CH₂CH₂CH₂(OH)CH₃), etc. , and those expressed by CₙH₂ₙ₊₁OH wherein n is a natural number of 1 to 10 are preferable. In addition, alicyclic hydrocarbons such as cyclohexanol, etc. can also be used.

As examples of the diol, 1,2-ethanediol(HOCH₂CH₂OH), 1,2-propanediol(CH₃CH(OH)CH₂OH), 1,3 propanediol (HOCH₂CH₂CH₂OH), etc. may be exemplified.

Examples of the alkane hydrocarbons mentioned above include pentane(C₅H₁₂), hexane (C₆H₁₄), heptane(C₇H₁₆), octane(C₈H₁₈), nonane (C₉H₂₀), decane(C₁₀H₂₂), etc., and those expressed by CₙH₂ₙ₊₂ wherein n is a natural number of 5 to 15 are preferable. In addition, any alicyclic hydrocarbon such as cyclohexane, etc. may be applicable.

As examples of the ketone, acetone(CH₃COCH₃), 2-butanone (CH₃COC₂H₅) , 3-pentanone(CH₃CH₂COCH₂CH₃), 3-methyl-2-butanone (CH₃COCH(CH₃)₂) , etc. may be exemplified, and those expressed by R¹COR² wherein R¹ and R² are each an aliphatic hydrocarbon residue, and a total carbon number in R¹ and R² is not more than 8 are preferable. In addition, any cyclic ketone such as cyclohexanone (C₆H₁₀O), etc., may be used.

Examples of the ether include any substance expressed by R¹-O-R² wherein R¹ and R² are each an aliphatic hydrocarbon residue, and a total carbon number of R¹ and R² is not more than 8, and glycolether such as 2-methoxyethanol(CH₃OCH₂CH₂OH), 2-ethoxyethanol(CH₃CH₂OCH₂CH₂OH), 2-butoxyethanol (CH₃CH₂CH₂CH₂ OCH₂CH₂OH) , 2-(2-ethoxy)ethoxyethanol(CH₃CH₂OCH₂CH₂OCH₂CH₂OH), etc.

As examples of the ester, acetic ester expressed by CH₃COOR wherein R is an aliphatic hydrocarbon residue with 1 to 5 carbon atoms may be exemplified.

In addition, examples of the petroleum products include industrial-gasoline (JIS K 2201), motor gasoline (JIS K 2202), aviation gasoline (JIS K 2206), lamp oil (JIS K 2203), light oil (JIS K 2204), aviation gasoline (JIS K 2206), petroleum ether (JIS K 8593), petroleum benzene (JIS K 8594), ligroin (JIS K 8937), kerosene, etc.

Although the surfactant is not also specifically defined, anionic surfactants, cationic surfactants, and nonionic surfactants may be used, and these surfactants are added to water, which are used as cleaning liquid.

As the anionic surfactant, sulfate salts and sulfonates may be used.

As further specific sulfate salts, R-OSO₃Na wherein R is a saturated hydrocarbon residue or unsaturated hydrocarbon residue with one double bond, which have 8 to 18 carbon atoms, may be used, and specifically, sodium dodecyl sulfate(C₁₂H₂₅OSO₃Na), sodium hexadecyl sulfate(C₁₆H₃₃OSO₃Na), sodium stearyl sulfate (C₁₈H₃₇OSO₃Na), sodium oleyl sulfate (C₁₈H₃₅OSO₃Na), etc. can be exemplified.

As the sulfonate, those expressed by R-SO₃Na wherein R is a saturated hydrocarbon residue or unsaturated hydrocarbon residue with one double bond, which have 8 to 18 carbon atoms, or R-SO₃Na wherein R is an alkylbenzyl group in which alkyl group has 8 to 14 carbon atoms of a saturated hydrocarbon residue or unsaturated hydrocarbon residue with one double bond, such as sodium dodecylbenzene sulfonate(C₁₂H₂₅-C₆H₄-SO₃Na) , etc. may be used.

As the cationic surfactant, quaternary ammonium salts expressed by R-N⁺(CH₃)₃ · Cl⁻ wherein R is an unsaturated hydrocarbon residue with 8 to 16 carbon atoms may be used.

As the nonionic surfactant, nonionic polyethyleneglycol type surfactant expressed by R-O-(CH₂CH₂O-)ₙH wherein R is a saturated hydrocarbon residue or unsaturated hydrocarbon residue with one double bond, which have 8 to 16 carbon atoms, and n is 6 to 14, or R-O-(CH₂CH₂O-)ₙH wherein R is an alkyl phenyl residue in which an alkyl group has 8 to 12 carbon atoms of a saturated hydrocarbon residue or unsaturated hydrocarbon residue with one double bond, and n is 6 to 14, may be exemplified. In addition, any surfactant with n exceeding the above limits may be contained in the nonionic surfactant in a molar ratio of 50% or less.

At least one kind of the above surfactant may be added to water and used as a cleaning liquid. Any surfactant with the carbon number below the above range may be used in a molar ratio of 50% or less. Since mixing of the anionic surfactant and the cationic surfactant in water generates precipitates, it would be preferable to avoid mixing.

Although the concentration of the surfactants in a cleaning liquid is not specifically defined, it would be preferably not less than the critical micelle concentration so as to fulfill the degreasing effect.

In addition, only any one of degreasing with the organic solvent and degreasing with the surfactant may take place, or both of them may take place sequentially.

Furthermore, for the purpose of degreasing, a surfactant or an organic solvent that can be mixed with water may be added into an acidic aqueous solution with which the aluminum material is brought into contact. Although kinds of surfactants to be added to the acidic aqueous solution are not specifically defined, the same surfactants as used in the degreasing process before contact with the acidic aqueous solution, to be specific, the anionic surfactants, cationic surfactants, and nonionic surfactants mentioned above may be used. At least one of these surfactant is added into the acidic aqueous solution and may be used, or any surfactant with the carbon number below the above range may be added in a molar ratio of 50% or less. Although the concentration of the surfactant is not specifically defined, it would be preferably not less than critical micelle concentration so as to achieve the washing effect. Although kinds of the organic solvents to be added into the acidic aqueous solution are also not specifically defined, organic solvents used for degreasing prior to contact with the acidic aqueous solution and capable of mixing with water, to be specific, methanol, ethanol, propanol, acetone, diol such as ethyleneglycol, etc. and dioxane, etc. can be exemplified.

### [Removal of Surface Layer]

In order to remove the contaminated layer and heterogeneous oxide film after cold rolling, a removal amount from the surface layer, i.e., a removal depth would be preferably 5 to 200 nm per side of the aluminum material.

Now, the removal amount of the aluminum material surface layer, D (nm), shall be defined as D (nm) = E x 10⁷/2.7 wherein E (g/cm²) is a decrease in weight per unit surface area, and 2.7g/cm³ is a density of aluminum.

If the removal amount of the surface layer is less than 5 nm, the effect of removing any contaminant or heterogeneous oxide film of the surface of the cold-rolled aluminum material might be inadequate. On the one hand, if the removal amount of the surface layer exceeds 200 nm, etch pit nucleation formation on the surface layer will be suppressed, thus degrading etch pit dispersibility and reducing capacitance. More preferably, the removal amount of the aluminum material surface layer would be 5 to 150 nm.

Although a method of removing the surface layer of the aluminum material is not specifically defined, a method of dissolving the surface layer of the aluminum material with an alkali aqueous solution can be exemplified.

As to the alkali aqueous solution to be used for removal of the aluminum material surface layer, alkalis contained in the liquid include sodium hydroxide, calcium hydroxide, potassium hydroxide, sodium o-silicate, sodium m-silicate, and trisodium phosphate can be exemplified, and the alkali aqueous solution is prepared by dissolving one or more kind of the alkalis in water. The removal amount of the surface layer of aluminum material may be adjusted by making the concentration of alkalis, the temperature of the alkali aqueous solution, and the contact time of the aluminum material with alkali aqueous solution adequate.

Although the method for bringing the aluminum material into contact with the alkali aqueous solution is not specifically defined, immersion, contact of the aluminum material with the surface of the washing liquid, spraying, etc. may be possible.

### [Annealing]

The aluminum material brought into contact with the acidic aqueous solution is then annealed after being washed and dried.

Although the method for drying is not specifically defined, atmospheric heating, inert atmospheric heating, vacuum heating, or contact heating between a heating body and the aluminum material may be used.

The annealing not only moderately generates the particulates of the crystalline oxide that will act as etch pit nucleations on the surface of the aluminum material, but also forms a stabilized and homogeneous oxide film on the surface layer.

The annealing temperature and annealing duration time have an effect on the generation of the crystalline oxide particulates, and if the annealing temperature is higher or the annealing duration time is longer, the generation and growth of the crystalline oxide particulates are promoted.

In the present invention, in order to achieve the moderate generation of the particulates of crystalline oxide, annealing is carried out under the conditions satisfying 450° C ≦ y ≦ 580° C when 1. 5 hours ≦ x ≦ 8 hours; 450°C ≦ y ≦ (660-10x)°C when 8 hours≦x<10 hours; and 450° C ≦ y ≦ 560° C when 10 hours ≦ x wherein x is an annealing duration time in which a constant temperature of not less than 450° C is maintained and y is the annealing temperature. The annealing conditions represent an area surrounded by ABCDEHGF in the graph of Fig. 1 showing the relationship between the annealing duration time and the annealing temperature.

As there are less particulates of the crystalline oxide generated when the annealing temperature is low, the present application specifies that the lower limit of the annealing temperature is 450°C. As the aluminum materials adhere to each other when they are stacked and annealed at an annealing temperature of too high, the upper limit of the annealing temperature shall be 580°C. If the annealing duration time is short, generation of the particulates of the crystalline oxide will be insufficient. Thus, the annealing duration time is specified to be not less than 1.5 hours. In addition, the particulates of the crystalline oxide are easily generated when the annealing temperature is high. If the annealing duration time is longer, the proportion of the area that crystalline oxide particulates are occupied in the surface of aluminum material goes too high, and the etching characteristics deteriorate more. Thus, the shorter annealing duration time would be desirable. On the other hand, if the annealing temperature is relatively low, the proportion of the area that crystalline oxide particulates are occupied in the surface of aluminum material does not go too high even when the annealing duration time is longer, thus enabling a long-time annealing. Therefore, a relationship between the annealing duration time (x) and the annealing temperature (y) shall be such specified that when the annealing duration time is shorter, the upper limit of the annealing temperature is set high, and when the annealing duration time is longer, the upper limit of the annealing temperature is set low so that too many particulates of crystalline oxide will not be generated. In addition, as discussed earlier, since the proportion of the area that crystalline oxide particulates are occupied does not rise excessively if annealing takes place at low temperatures even though the annealing duration time is longer, the present invention shall set no upper limit to the annealing duration time. However, since annealing exceeding 100 hours only leads to saturation of the effect of expanding the etching area and even increases thermal energy cost, the annealing duration time would preferably be not more than 100 hours in the light of processing cost.

More preferable annealing conditions shall satisfy the relationship of the following: 450° C≦y≦580° C when 1.5 hours ≦ x<4.5 hours; 450° C≦y≦ (625-10x)° C when 4.5 hours ≦ x<10 hours; and 450° C≦y≦ 525° C when 10 hours ≦ x. The preferable annealing conditions represent an area surrounded by AB'C'D'E'HGF in FIG. 1.

Further more preferable annealing conditions shall satisfy the relationship of the following: 490° C ≦ y ≦ 580° C when 1.5 hours ≦ x ≦ 4.5 hours; 490° C ≦ y ≦ (625-10x)° C when 4.5 hours ≦ x<10 hours; and 490° C ≦ y ≦ 525° C when 10 hours ≦ x ≦ 22 hours, and represent an area surrounded by AB'C'IJK in FIG. 1. Still further more preferable annealing conditions shall satisfy the relationship of the following: 510°C ≦y≦570°C when 2 hours ≦x<5.5 hours; 510° C ≦y≦(625-10x)°C when 5.5 hours ≦x<10 hours; and 510°C≦y≦525°C when 10 hours ≦x≦20 hours, and represent an area surrounded by LMC'NOP in FIG. 1.

The particulates of the crystalline oxide include, but not limited to, Al₂O₃ such as γ -Al₂O₃, AlOOH such as boehmite , oxides and hydroxides containing a metal other than aluminum (e.g., Mg, Pb, Cu), composite metal oxides or hydroxides containing aluminum and a metal other than aluminum (e.g. , Mg, Pb, Cu , etc.), and may be single crystal or polycrystal. In addition, they may be comprised of one crystal or multiple crystals being covered with an amorphous substance, and amorphous oxides may be present among aggregated oxide crystals.

Crystalline oxides that are present on the surface of a produced aluminum material for electrolytic capacitors can be checked by observing with a transmission electron microscope a sample of dissolved aluminum to be obtained by forming a vapor deposited film such as of carbon, etc. as a supporting film on the single side of the aluminum material, and then immersing it in a bromine-methanol solution. In addition to the bromine-methanol solution, a mercuric chloride solution, iodine-methanol solution, etc. may also be applicable as the solution to be used for dissolving aluminum when preparing the sample for observation with the transmission electron microscope.

In addition, in annealing, it would be preferable to avoid deterioration of etching characteristics by increasing too much the thickness of an oxide film during annealing process, that was formed on the aluminum material in a preprocessing, i.e., an acid-contact process. If it was final annealing, it would be preferable to carry out final annealing so that the total thickness of the oxide film after final annealing is 2.5 to 5 nm measured according to the Hunter-Fowle method (refer to M.S. Hunter and P. Fowle J. Electrochem. Soc., 101[9], 483(1954)). In addition, preferably, (100) area ratio of aluminum material after final annealing is not less than 90%.

Although a processing atmosphere in the annealing is not specifically defined, it would be preferable to heat in the atmosphere with less moisture and oxygen so as not to increase a thickness of an oxide film too much. To be specific, preferably, heating would take place in an inert gas such as argon, nitrogen, etc., or in a vacuum of 0.1 Pa or less. Particularly preferable annealing atmosphere would be in an inert gas atomosphere.

In addition, a temperature rising speed/pattern is not specifically defined. The temperature rising at a constant speed is also applicable, or step-by-step temperature rising/cooling by repeating cycles of temperature rising and temperature maintenance may also be possible. When the annealing temperature is stepwise changed through temperature rising/cooling, it would be acceptable if each annealing temperature y and annealing duration time x fell within FIG. 1 for temperature maintenance in the temperature zone of 450° C or higher. No limit shall be set to the temperature maintenance conditions of less than 450° C when the annealing temperature is stepwise changed. In addition, even when the temperature continues to vary without being maintained in the temperature zone of 450°C or higher, for the temperature zone in which temperature difference fluctuates in the range of ±20°C for 1.5 hours or longer, it is assumed that the temperature is maintained, and the annealing temperature shall be the mean in the time zone.

A thickness of the aluminum material for electrolytic capacitors to be obtained after final annealing is not specifically defined. The present invention includes aluminum material referred to as a foil having a thickness of not more than 200 µm and that being thicker.

The aluminum material that has undergone final annealing shall be etched for increasing the magnified surface area ratio and made an electrode material for electrolytic capacitors. Although etching process conditions are not specifically defined, preferably, at least a part of etching would be direct current etching. The direct current etching would allow deep and thick etching in a part that will act as etch pit nucleations of which was promoted in the annealing, thus producing a number of tunnel-structured pits, and implementing a high capacitance.

After etching process, desirably, it would be good to convert the electrode material into anode material through formation of the dielectric treatment and, particularly, to be used as an electrode material for a medium or high voltages electrolytic capacitor. However, the invention shall not prevent use of the electrode material as cathode material. In addition, electrolytic capacitors using the electrode material could implement a large capacitance.

In addition, measurement of capacitance may be carried out according to a conventional method, and, a method for measuring a capacitance of an etched foil that has undergone formation of the dielectric treatment, at 120 Hz in a 80 g/L aqueous ammonium borate solution at 30° C, for instance, with a stainless plate used as a counter electrode can be exemplified.

### Examples

In the following, Examples of the present invention and Comparative Examples will be illustrated.

Alkali aqueous solutions listed in Table 1 to remove a surface layer of aluminum material were prepared.

**Table 1 Alkali Aqueous Solutions to be used for Removal of a Surface Layer**

| Symbols of Alkali Aqueous Solutions | Kind of Alkali | Concentration (Mass%) | Liquid Temperature (°C) |
|---|---|---|---|
| A | Sodium hydroxide | 0.2 | 50 |
| B | Calcium hydroxide | 0.2 | 50 |
| C | Potassium hydroxide | 0.2 | 50 |
| D | Sodium orthosilicate | 0.2 | 50 |
| E | Sodium m-silicate | 0.2 | 50 |
| F | Trisodium phosphate | 0.2 | 50 |

### (Examples 1 to 51)

An aluminum foil having a purity of 99.99 mass% that was rolled to a thickness of 110 µm was washed with water after removal of a surface layer with an alkali aqueous solution under conditions listed in Tables 2 and 3. Then, the foil was immersed in an acidic aqueous solution containing an acid or more than one acids, then washed with water and dried sequentially in the conditions shown in Tables 2 and 3. The dried aluminum foil was subjected to a temperature rising at 50°C/h from the room temperature in argon atmosphere to an annealing temperature listed in Tables 2 and 3. Then, it underwent final annealing in which it was maintained at the annealing temperature for the annealing duration time listed in Tables 2 and 3, and then it was cooled to give an aluminum foil for electrolytic capacitor electrodes was obtained.

The "phosphoric acid" in Tables 2 and 3 is "orthophosphoric acid".

### (Example 52)

After an aluminum foil having a purity of 99.99 mass% that was rolled to a thickness of 110 µm was degreased with acetone, it was immersed in a 3 mass% aqueous hydrochloric acid solution at 30° C for 60 seconds, then washed with water, and dried in the air sequentially. The dried aluminum foil was subjected to a temperature rising at 50°C/h from the room temperature in argon atmosphere to 540° C. Then, the aluminum foil was subjected to a final annealing in which it was maintained at 540° C for 5 hours, and then cooled to give an aluminum foil for electrolytic capacitor electrodes.

### (Example 53)

After an aluminum foil having a purity of 99.99 mass% that was rolled to a thickness of 110 µm was degreased with acetone, it was immersed in a 3 mass% aqueous nitric acid solution at 30° C for 60 seconds, then washed with water, and dried in the air sequentially. The dried aluminum foil was subjected to a temperature rising at 50° C/h from the room temperature in argon atmosphere to 540°C. Then, the aluminum foil was subjected to final annealing in which it was maintained at 540° C for 5 hours, and then cooled to give an aluminum foil for electrolytic capacitor electrodes.

### (Example 54)

After an aluminum foil having a purity of 99.99 mass% that was rolled to a thickness of 110 µm was degreased with n-hexane, it was immersed in a 3 mass% aqueous sulfuric acid solution at 30° C for 60 seconds, then washed with water, and dried in the air sequentially. The dried aluminum foil was subjected to a temperature rising at 50°C/h from the room temperature in argon atmosphere to 540°C. Then, the aluminum foil was subjected to a final annealing in which it was maintained at 540° C for 5 hours, and then cooled to give an aluminum foil for electrolytic capacitor electrodes.

### (Example 55)

After an aluminum foil having a purity of 99.99 mass% that was rolled to a thickness of 110 µm was degreased with n-hexane, it was immersed in a 3 mass% aqueous phosphoric acid solution at 30° C for 60 seconds, then washed with water, and dried in the air sequentially. The dried aluminum foil was subjected to a temperature rising at 50°C/h from the room temperature in argon atmosphere to 540°C. Then, the aluminum foil was subjected to a final annealing in which it was maintained at 540° C for 5 hours, and then cooled to give an aluminum foil for electrolytic capacitor electrodes.

### (Example 56)

After an aluminum foil having a purity of 99.99 mass% that was rolled to a thickness of 110 µm was degreased with water containing dodecyl sodium sulfate in a proportion of 0.1 mass% as a surfactant, it was immersed in a 3 mass% aqueous hydrochloric acid solution at 30° C for 60 seconds, then washed with water, and dried in the air sequentially. The dried aluminum foil was subjected to a temperature rising at 50°C/h from the room temperature in argon atmosphere to 540° C. Then, the aluminum foil was subjected to a final annealing in which it was maintained at 540°C for 5 hours, and then cooled to give an aluminum foil for electrolytic capacitor electrodes.

### (Example 57)

After an aluminum foil having a purity of 99.99 mass% that was rolled to a thickness of 110 µm was degreased with water containing dodecyl sodium sulfate in a proportion of 0.1 mass% as a surfactant, it was immersed in a 3 mass% aqueous nitric acid solution at 30° C for 60 seconds, then washed with water, and dried in the air sequentially. The dried aluminum foil was subjected to a temperature rising at 50°C/ h from the room temperature in argon atmosphere to 540° C. Then, the aluminum foil was subjected to a final annealing in which it was maintained at 540°C for 5 hours, and then cooled to give an aluminum foil for electrolytic capacitor electrodes.

### (Example 58)

After an aluminum foil having a purity of 99.99 mass% that was rolled to a thickness of 110 µm was degreased with water containing dodecyl sodium sulfate in a proportion of 0.1 mass% as a surfactant, it was immersed in a 3 mass% aqueous sulfuric acid solution at 30° C for 60 seconds, then washed with water, and dried in the air sequentially. The dried aluminum foil was subjected to a temperature rising at 50°C/h from the room temperature in argon atmosphere to 540° C. Then, the aluminum foil was subjected to a final annealing in which it was maintained at 540° C for 5 hours, and then cooled to give an aluminum foil for electrolytic capacitor electrodes.

### (Example 59)

After an aluminum foil having a purity of 99.99 mass% that was rolled to a thickness of 110 µm was degreased with water containing dodecyl sodium sulfate in a proportion of 0.1 mass% as a surfactant, it was immersed in a 3 mass% aqueous phosphoric acid solution at 30° C for 60 seconds, then washed with water, and dried in the air sequentially. The dried aluminum foil was subjected to a temperature rising at 50°C/h from the room temperature in argon atmosphere to 540° C. Then, the aluminum foil was subjected to a final annealing in which it was maintained at 540° C for 5 hours, and then cooled to give an aluminum foil for electrolytic capacitor electrodes.

### (Example 60)

An aluminum foil having a purity of 99.99 mass% that was rolled to a thickness of 110 µm was immersed at 70° C for 60 seconds in an acidic aqueous solution containing dodecyl sodium sulfate in a proportion of 0.1 mass% and sulfuric acid in a proportion of 3 mass%. Then, it was washed with water and dried in the air sequentially. The dried aluminum foil was subjected to a temperature rising at 50° C/h from the room temperature in argon atmosphere to 540° C. Then, the aluminum foil was subjected to a final annealing in which it was maintained at 540° C for 5 hours, and then cooled to give an aluminum foil for electrolytic capacitor electrodes.

### (Example 61)

An aluminum foil having a purity of 99.99 mass% that was rolled to a thickness of 110 µm was immersed in a 25 mass% aqueous sulfuric acid solution at 70° C for 60 seconds. Then, it was washed with water and dried in the air sequentially. The dried aluminum foil was subjected to a temperature rising at 50° C/h from the room temperature in argon atmosphere to 540° C. Then, the aluminum foil was subjected to a final annealing in which it was maintained at 540° C for 5 hours, and then cooled to give an aluminum foil for electrolytic capacitor electrodes.

### (Example 62)

An aluminum foil having a purity of 99.99 mass% that was rolled to a thickness of 110 µm was immersed in a 58 mass% aqueous sulfuric acid solution at 30° C for 60 seconds. Then, it was washed with water and dried in the air sequentially. The dried aluminum foil was subjected to a temperature rising at 50° C/h from the room temperature in argon atmosphere to 540° C. Then, the aluminum foil was subjected to a final annealing in which it was maintained at 540°C for 5 hours, and then cooled to give an aluminum foil for electrolytic capacitor electrodes.

### (Example 63)

An aluminum foil having a purity of 99.99 mass% that was rolled to a thickness of 110 µm was immersed in a 10 mass% aqueous sulfuric acid solution at 92° C for 20 seconds. Then, it was washed with water and dried in the air sequentially. The dried aluminum foil was subjected to a temperature rising at 50° C/h from the room temperature in argon atmosphere to 540° C. Then, the aluminum foil was subjected to a final annealing in which it was maintained at 540°C for 5 hours, and then cooled to give an aluminum foil for electrolytic capacitor electrodes.

### (Examples 64 to 72)

After an aluminum foil having purity of 99.99 mass% that was rolled to thickness of 110 µm was degreased with acetone, it was immersed in a sulfuric acid solution of 4 mass% at 60° C for 60 seconds, then washed, and dried in the air sequentially. The dried aluminum foil was subjected to temperature rising at 50° C/h from the room temperature in argon atmosphere to the final annealing temperature listed in Table 4. Then, it underwent final annealing in which it was maintained at the final annealing temperature for the annealing duration time listed in Table 4, and then it was cooled. Thus, the aluminum foil for electrolytic capacitor electrodes was obtained.

Table 4 lists the preparation conditions of the aluminum foils for electrolytic capacitor electrodes of Examples 52 to 72. In Table 4, "phosphoric acid" is "orthophosphoric acid".

### (Comparative Examples 1 to 9)

An aluminum foil having a purity of 99.99 mass% that was rolled to a thickness of 110 µm was treated with liquid B in Table 1 to remove its surface layer by 75 nm and washed with water. Then, after the aluminum foil was immersed in a 2 mass% aqueous nitric acid solution at 60°C for 30 seconds, it was washed with water and dried sequentially. The dried aluminum foil was subjected to a temperature rising at 50° C/h from the room temperature in argon atmosphere to the annealing temperature listed in Table 5. Then, the aluminum foil underwent a final annealing in which it was maintained at the annealing temperature for the annealing duration time listed in Table 5. Then, the aluminum foil was cooled and taken out of a furnace to give an aluminum foil for electrolytic capacitor electrodes.

After the aluminum foils for electrolytic capacitor electrodes obtained from Examples and Comparative Examples were each immersed in an aqueous solution containing 1.0 mol/l of HCl and 3.5 mol/l of H₂SO₄ at a liquid temperature of 75°C, and they were subjected to electrolytic etching at a current density of 0.2 A/cm². The electrolytic etched foil was further immersed in a solution containing hydrochloric acid and sulfuric acid in the same composition as above at 90° C for 360 seconds to give an etched foil with pits having a larger diameter.

In accordance with the EIAJ standard, the etched foils thus obtained were subjected to a formation of the dielectric treatment at a voltage of 270 V to obtain samples for measurement of a capacitance, and then capacitances were measured. Tables 2 to 5 list the preparation conditions of the aluminum foil for electrolytic capacitor electrodes and relative capacitances when it was assumed that the capacitance of Comparative Example 6 was 100%.

**Table 2 Preparation Conditions of Aluminum Foil for Electrolytic Capacitor Electrodes and Relative Capacitance**

| | | Removal of Surface Layer | | Immersion in an Acidic Aqueous Solution | | | Final Annealing | | Relative Capacitance (%) |
|---|---|---|---|---|---|---|---|---|---|
| | | Alkali Type | Removal Amount (nm) | Kind of Acid and Concentration | Liquid Temperature (°C) | Immersion Time (sec) | Annealing Temperature (°C) | Annealing Duration Time (hour) | |
| Example | 1 | A | 80 | Sulfuric acid of 3 mass % | 30 | 60 | 540 | 4 | 115 |
| | 2 | A | 80 | Nitric acid of 3 mass % | 45 | 60 | 540 | 4 | 113 |
| | 3 | A | 80 | Hydrochloric acid of 3 mass % | 30 | 60 | 510 | 24 | 115 |
| | 4 | A | 80 | Phosphoric acid of 3 mass % | 60 | 30 | 550 | 4 | 114 |
| | 5 | B | 75 | Nitric acid of 2 mass % | 60 | 30 | 580 | 1.6 | 106 |
| | 6 | B | 75 | Nitric acid of 2 mass % | 60 | 30 | 580 | 4.2 | 107 |
| | 7 | B | 75 | Nitric acid of 2 mass % | 60 | 30 | 520 | 10 | 107 |
| | 8 | B | 75 | Nitric acid of 2 mass % | 60 | 30 | 520 | 98 | 106 |
| | 9 | B | 75 | Nitric acid of 2 mass % | 60 | 30 | 460 | 1.9 | 104 |
| | 10 | B | 75 | Nitric acid of 2 mass % | 60 | 30 | 460 | 96 | 104 |
| | 11 | B | 75 | Nitric acid of 2 mass % | 60 | 30 | 580 | 7.6 | 103 |
| | 12 | B | 75 | Nitric acid of 2 mass % | 60 | 30 | 555 | 10 | 103 |
| | 13 | B | 75 | Nitric acid of 2 mass % | 60 | 30 | 555 | 95 | 102 |
| | 14 | C | 7 | Nitric acid of 1.2 mass % | 30 | 50 | 560 | 4 | 110 |
| | 15 | C | 7 | Nitric acid of 4.7 mass % | 30 | 50 | 560 | 4 | 107 |
| | 16 | C | 7 | Nitric acid of 0.0007 mass % | 30 | 50 | 560 | 4 | 102 |
| | 17 | C | 7 | Nitric acid of 25 mass % | 30 | 50 | 560 | 4 | 105 |
| | 18 | D | 90 | Sulfuric acid of 1.2 mass % | 50 | 35 | 530 | 6 | 112 |
| | 19 | D | 90 | Sulfuric acid of 9.3 mass % | 50 | 35 | 530 | 6 | 113 |
| | 20 | D | 90 | Sulfuric acid of 0.0007 mass % | 50 | 35 | 530 | 6 | 103 |
| | 21 | D | 90 | Sulfuric acid of 28 mass % | 50 | 35 | 530 | 6 | 104 |
| | 22 | E | 70 | Hydrochloric acid of 1.3 mass % | 30 | 70 | 520 | 20 | 112 |
| | 23 | E | 70 | Hydrochloric acid of 9.4 mass % | 30 | 70 | 520 | 20 | 112 |
| | 24 | E | 70 | Hydrochloric acid of 0.007 mass % | 30 | 70 | 520 | 20 | 105 |
| | 25 | E | 70 | Hydrochloric acid of 0.0007 mass % | 30 | 70 | 520 | 20 | 103 |
| | 26 | E | 70 | Hydrochloric acid of 27 mass % | 30 | 70 | 520 | 20 | 103 |
| | 27 | F | 80 | Phosphoric acid of 1.3 mass % | 45 | 10 | 530 | 5 | 111 |
| | 28 | F | 80 | Phosphoric acid of 9.2 mass % | 45 | 10 | 530 | 5 | 112 |
| | 29 | F | 80 | Phosphoric acid of 0.0007 mass % | 45 | 10 | 530 | 5 | 103 |
| | 30 | F | 80 | Phosphoric acid of 29 mass % | 45 | 10 | 530 | 5 | 103 |

**Table 3 Preparation Conditions of Aluminum Foil for Electrolytic Capacitor Electrodes and Relative Capacitance**

| | | Removal of Surface Layer | | lmmersion in an Acidic Aqueous Solution | | | Final Annealing | | Relative Capacitance (%) |
|---|---|---|---|---|---|---|---|---|---|
| | | Alkali Type | Removal Amount (nm) | Kind of Acid and Concentration | Liquid Temperature (°C) | Immersion Time (sec) | Annealing Temperature (°C) | Annealing Duration Time (hour) | |
| Example | 31 | A | 5 | Sulfuric acid of 2 mass % Nitric acid of 2 mass % | 30 | 30 | 550 | 5 | 111 |
| | 32 | B | 10 | Sulfuric acid of 2 mass % Hydrochloric acid or 2 mass % | 30 | 30 | 500 | 10 | 109 |
| | 33 | C | 20 | Sulfuric acid of 2 mass % Phosphoric acid of 2 mass % | 30 | 30 | 520 | 12 | 108 |
| | 34 | D | 50 | Nitric acid of 2 mass % Hydrochloric acid of 2 mass % | 30 | 30 | 560 | 4 | 112 |
| | 35 | E | 65 | Nitric acid of 2 mass % Phosphoric acid of mass % | 30 | 30 | 500 | 60 | 111 |
| | 36 | F | 80 | Hydrochloric acid of 2 mass % Phosphoric acid of 2 mass % | 30 | 30 | 490 | 80 | 111 |
| | 37 | A | 100 | Sulfuric acid of 2 mass % Nitric acid of 2 mass % Hydrochloric acid of 2 mass % | 30 | 30 | 510 | 15 | 108 |
| | 38 | B | 120 | Sulfuric acid of 2 mass % Nitric acid of 2 mass % Phosphoric acid of 2 mass % | 30 | 30 | 530 | 6 | 109 |
| | 39 | C | 110 | Sulfuric acid of 2 mass % Hydrochloric acid of 2 mass % Phosphoric acid of 2 mass % | 30 | 30 | 580 | 3 | 108 |
| | 40 | D | 15 | Nitric acid of 2 mass % Hydrochloric acid of 2 mass % Phosphoric acid or 2 mass % | 30 | 30 | 500 | 18 | 108 |
| | 41 | E | 75 | Sulfuric acid of 2 mass % Nitric acid of 2 mass % Hydrochloric acid of 2 mass % Phosphoric acid of 2 mass % | 30 | 30 | 550 | 5 | 109 |
| | 42 | A | 10 | Sulfuric acid of 5 mass % | 22 | 20 | 540 | 5 | 110 |
| | 43 | A | 10 | Sulfuric acid of 5 mass % | 68 | 20 | 540 | 5 | 111 |
| | 44 | A | 10 | Sulfuric acid of 5 mass % | 12 | 20 | 540 | 5 | 109 |
| | 45 | A | 10 | Sulfuric acid of 5 mass % | 85 | 20 | 540 | 5 | 110 |
| | 46 | A | 10 | Sulfuric acid of 5 mass % | 30 | 0.6 | 540 | 5 | 110 |
| | 47 | A | 10 | Sulfuric acid of 5 mass % | 30 | 290 | 540 | 5 | 111 |
| | 48 | A | 10 | Sulfuric acid of 5 mass % | 30 | 0.2 | 540 | 5 | 109 |
| | 49 | A | 10 | Sulfuric aad of 5 mass % | 30 | 580 | 540 | 5 | 110 |
| | 50 | A | 140 | Hydrochloric acid of 1.5 mass % | 30 | 60 | 540 | 5 | 108 |
| | 51 | A | 190 | Sulfuric acid of 5.2 mass % | 30 | 60 | 540 | 5 | 104 |

| | | | | | | | | | |
|---|---|---|---|---|---|---|---|---|---|
| *Amount of removal from a surface layer is a value per side of aluminum material. | | | | | | | | | |

**Table 4 Preparation Conditions of Aluminum Foil for Electrolytic Capacitor Electrodes and Relative Capacitance**

| | | Degreasing before Immersion in an Acidic Aqueous Solution | Immersion in an Acidic Aqueous Solution | | | Final Annealing | | Relative Capacitance (%) |
|---|---|---|---|---|---|---|---|---|
| | | | Kind of Acid and Concentration Surfactant | Liquid Temperature (°C) | Immersion Time (sec) | Annealing Temperature (°C) | Duration Time (hour) | |
| Example | 52 | Acetone | Hydrochloric acid of 3 mass % | 30 | 60 | 540 | 5 | 113 |
| | 53 | Acetone | Nitric acid of 3 mass % | 30 | 60 | 540 | 5 | 112 |
| | 54 | n-hexane | Sulfuric acid of 3 mass % | 30 | 60 | 540 | 5 | 113 |
| | 55 | n hexane | Phosphoric acid of 3 mass % | 30 | 60 | 540 | 5 | 112 |
| | 56 | Surfactant +Water | Hydrochloric acid of 3 mass % | 30 | 60 | 540 | 5 | 113 |
| | 57 | Surfactant +Water | Nitric acid of 3 mass % | 30 | 60 | 540 | 5 | 112 |
| | 58 | Surfactant +Water | Sulfuric acid of 3 mass % | 30 | 60 | 540 | 5 | 113 |
| | 59 | Surfactant +Water | phosphoric acid of 3 mass % | 30 | 60 | 540 | 5 | 112 |
| | 60 | - | Sulfuric acid of 3 mass % surfactant | 70 | 60 | 540 | 5 | 105 |
| | 61 | - | Sulfuric acid of 25 mass % | 70 | 60 | 540 | 5 | 106 |
| | 62 | - | Sulfuric acid of 58 mass % | 30 | 60 | 540 | 5 | 103 |
| | 63 | - | Sulfuric acid of 10 mass % | 92 | 20 | 540 | 5 | 107 |
| | 64 | Acetone | Sulfuric acid of 4 mass % | 60 | 60 | 570 | 2 | 109 |
| | 65 | Acetone | Sulfuric acid of 4 mass % | 60 | 60 | 570 | 5.5 | 111 |
| | 66 | Acetone | Sulfuric acid of 4 mass % | 60 | 60 | 525 | 10 | 109 |
| | 67 | Acetone | Sulfuric acid of 4 mass % | 60 | 60 | 525 | 22 | 110 |
| | 68 | Acetone | Sulfuric acid of 4 mass % | 60 | 60 | 490 | 22 | 108 |
| | 69 | Acetone | Sulfuric acid of 4 mass % | 60 | 60 | 490 | 1.5 | 105 |
| | 70 | Acetone | Sulfuric acid of 4 mass % | 60 | 60 | 525 | 20 | 110 |
| | 71 | Acetone | Sulfuric acid of 4 mass % | 60 | 60 | 510 | 20 | 110 |
| | 72 | Acetone | Sulfuric acid of 4 mass % | 60 | 60 | 510 | 2 | 107 |

| | | | | | | | | |
|---|---|---|---|---|---|---|---|---|
| *Amount of removal from a surface layer is a value per side of aluminum material. | | | | | | | | |

**Table 5 Preparation Conditions of Aluminum Foil for Electrolytic Capacitor Electrodes and Relative Capacitance**

| | | Removal of Surface Layer | | lmmersion in an Acidic Aqueous Solution | | | Final Annealing | | Relative Capacitance (%) |
|---|---|---|---|---|---|---|---|---|---|
| | | Alkali Type | Removal Amount (nm) | Kind of Acid and Concentration | Liquid Temperature (°C) | Immersion Time (sec) | Annealing Temperature (°C) | Annealing Duration Time (hour) | |
| Compara- tive Example | 1 | B | 75 | Nitric acid of 2 mass % | 60 | 30 | 450 | 1 | 95 |
| | 2 | B | 75 | Nitric acid of 2 mass % | 60 | 30 | 500 | 1 | 96 |
| | 3 | B | 75 | Nitric acid of 2 mass % | 60 | 30 | 580 | 1 | 98 |
| | 4 | B | 75 | Nitric acid of 2 mass % | 60 | 30 | 590 | 1.3 | Note 1 |
| | 5 | B | 75 | Nitric acid of 2 mass % | 60 | 30 | 590 | 7.5 | Note 1 |
| | 6 | B | 75 | Nitric acid of 2 mass % | 60 | 30 | 570 | 10 | 100 |
| | 7 | B | 75 | Nitric acid of 2 mass % | 60 | 30 | 570 | 99 | 96 |
| | 8 | B | 75 | Nitric acid of 2 mass % | 60 | 30 | 440 | 2 | 95 |
| | 9 | B | 75 | Nitric acid of 2 mass % | 60 | 30 | 440 | 95 | 96 |
| | 10 | B | 75 | Nitric acid of 0.1 mass % | 60 | 30 | 500 | 1 | 94 |
| | 11 | B | 75 | Nitric acid of 30 mass % | 60 | 30 | 570 | 10 | 94 |

As discussed above, the aluminum material for electrolytic capacitor electrodes with excellent etching characteristics could be obtained by bringing the cold rolled aluminum material into contact with the solution containing one or more acids selected from the group consisting of nitric acid, sulfuric acid, hydrochloric acid, and acids including phosphorus, and then annealing it under any of the following conditions: 450°C≦y≦ 580° C when 1. 5 hours≦x<8 hours, 450° C≦y≦ (660-10x)° C when 8 hours ≦x<10 hours and 450° C≦y≦560° C when 10 hours≦x.

In contrast, in Comparative Examples, the electrostatic capacities that were the same or more than those obtained in Examples could not be obtained because in the comparative examples, any of the following annealing conditions was not satisfied: 450° C ≦y≦580°C when 1.5 hours≦x<8 hours, 450° C≦y≦(660-10x)° C when 8 hours≦x<10 hours and 450° C≦y≦60° C when 10 hours≦x. In Comparative Examples 4 and 5, as the annealing temperatures were high, the foils were adhered to each other, and no evaluation of capacitances could be made.

### Industrial applicability

The present invention can be used as a method for producing an aluminum material for electrolytic capacitor electrodes, aluminum material for electrolytic capacitor electrodes, method for producing an electrode material for electrolytic capacitors, and aluminum electrolytic capacitors.

## Claims

1. A method for producing an aluminum material for electrolytic capacitor electrodes wherein a surface of a cold-rolled aluminum material is brought into contact with an acidic aqueous solution, and then annealing is carried out under conditions satisfying the following relationship between x and y: 450° C≦y≦580° C when 1. 5 hours≦x≦8 hours, 450° C≦y≦ (660-10x)° C when 8 hours≦x≦10 hours, and 450° C≦y≦560° C when 10 hours≦x, wherein x is an annealing duration time in which a constant temperature of not less than 450° C is maintained and y is an annealing temperature.

2. The method for producing an aluminum material for electrolytic capacitor electrodes as recited in claim 1, wherein the annealing is carried out under conditions satisfying 450°C ≦y≦580°C when 1. 5 hours ≦×<4.5 hours, 450° C≦y≦ (625-10x)° C when 4.5 hours≦×<10 hours, and 450° C≦y≦525° C when 10 hours≦x.

3. The method for producing an aluminum material for electrolytic capacitor electrodes as recited in claim 1, wherein the annealing is carried out under the conditions satisfying 490° C ≦y≦580° C when 1.5 hours≦x<4.5 hours, 490° C≦y≦ (625-10x)° C when 4.5 hours≦x<10 hours, and 490° C≦y≦525° C when 10 hours≦x≦22 hours.

4. The method for producing an aluminum material for electrolytic capacitor electrodes as recited in any one of claims 1 to 3, wherein an acid contained in the acidic aqueous solution is at least one acid selected from the group consisting of nitric acid, sulfuric acid, hydrochloric acid, and acids including phosphorus.

5. The method for producing an aluminum material for electrolytic capacitor electrodes as recited in any one of claims 1 to 4, wherein the annealing is carried out in an inert gas atmosphere.

6. The method for producing an aluminum material for electrolytic capacitor electrodes as recited in any one of claims 1 to 5, wherein a concentration of the nitric acid in the acidic aqueous solution is not less than 0.0005 mass% and not more than 25 mass%.

7. The method for producing an aluminum material for electrolytic capacitor electrodes as recited in claim 6, wherein a concentration of the nitric acid in the acidic aqueous solution is not less than 0.0005 mass% and not more than 4.7 mass%.

8. The method for producing an aluminum material for electrolytic capacitor electrodes as recited in claim 7, wherein a concentration of the nitric acid in the acidic aqueous solution is not less than 1.2 mass% and not more than 4.7 mass%.

9. The method for producing an aluminum material for electrolytic capacitor electrodes as recited in any one of claims 1 to 5 , wherein a concentration of the sulfuric acid in the acidic aqueous solution is not less than 0.0005 mass% and not more than 60 mass%.

10. The method for producing an aluminum material for electrolytic capacitor electrodes as recited in claim 9, wherein concentration of sulfuric acid in the acidic aqueous solution is not less than 1.2 mass% and not more than 30 mass%.

11. The method for producing an aluminum material for electrolytic capacitor electrodes as recited in claim 10, wherein a concentration of the sulfuric acid in the acidic aqueous solution is not less than 1.2 mass% and not more than 9.5 mass%.

12. The method for producing an aluminum material form electrolytic capacitor electrodes as recited in any one of claims 1 to 5, wherein a concentration of the hydrochloric acid in the acidic aqueous solution is not less than 0.0005 mass% and not more than 30 mass%.

13. The method for producing an aluminum material for electrolytic capacitor electrodes as recited in claim 12, wherein a concentration of the hydrochloric acid in the acidic aqueous solution is not less than 0.005 mass% and not more than 30 mass%.

14. The method for producing an aluminum material for electrolytic capacitor electrodes as recited in claim 13, wherein a concentration of the hydrochloric acid in the acidic aqueous solution is not less than 1.2 mass% and not more than 9.5 mass%.

15. The method for producing an aluminum material for electrolytic capacitor electrodes as recited in any one of claims 1 to 5, wherein the acid including phosphorus is orthophosphoric acid, and a concentration of the orthophosphoric acid in the acidic aqueous solution is not less than 0.0005 mass% and not more than 30 mass%.

16. The method for producing an aluminum material for electrolytic capacitor electrodes as recited in claim 15, wherein a concentration of the orthophosphoric acid in the acidic aqueous solution is not less than 1.2 mass% and not more than 30 mass%.

17. The method for producing an aluminum material for electrolytic capacitor electrodes as recited in claim 16, wherein a concentration of the orthophosphoric acid in the acidic aqueous solution is not less than 1.2 mass% and not more than 9.5 mass%.

18. The method for producing an aluminum material for electrolytic capacitor electrodes as recited in any one of claims 1 to 17, wherein a temperature of the acidic aqueous solution is 10° C or higher and 95° C or lower, and a contact time of the aluminum material with the acidic aqueous solution is not less than 0.2 second and not more than 10 minutes.

19. The method for producing an aluminum material for electrolytic capacitor electrodes as recited in one of claims 1 to 18, wherein the aluminum material is degreased after cold rolling and before contacting with the acidic aqueous solution.

20. The method for producing an aluminum material for electrolytic capacitor electrodes as recited in claim 19, wherein the degreasing is carried out with an organic solvent.

21. The method for producing an aluminum material for electrolytic capacitor electrodes as recited in claim 19, wherein the degreasing is carried out with water containing a surfactant.

22. The method for producing an aluminum material for electrolytic capacitor electrodes as recited in any one of claims 1 to 21, wherein the surface layer of the aluminum material is removed after cold rolling and before contacting with the acidic aqueous solution.

23. The method for producing an aluminum material for electrolytic capacitor electrodes as recited in claim 22, wherein an amount of the surface layer removed is 5 to 200 nm per side of the aluminum material.

24. The method for producing an aluminum material for electrolytic capacitor electrodes as recited in claim 23, wherein an amount of the surface layer removed is 5 to 150 nm per side of the aluminum material.

25. The method for producing an aluminum material for electrolytic capacitor electrodes as recited in any one of claims 22 to 24, wherein the surface layer is removed with an alkali aqueous solution.

26. The method for producing an aluminum material for electrolytic capacitor electrodes as recited in claim 25, wherein an alkali contained in the alkali aqueous solution is at least one alkali selected from the group consisting of sodium hydroxide, calcium hydroxide, potassium hydroxide, sodium o-silicate, sodium m-silicate, and trisodium phosphate.

27. The method for producing an aluminum material for electrolytic capacitor electrodes as recited in any one of claims 1 to 26, wherein an aluminum purity is not less than 99.9 mass%.

28. An aluminum material for electrolytic capacitor electrodes produced by the production method as recited in any one of claims 1 to 27.

29. The aluminum material for electrolytic capacitor electrodes as recited in claim 28, which is an anode material for medium or high voltages.

30. A method for producing an electrode material for electrolytic capacitors, wherein an aluminum material produced by the production method as recited in any one of claims 1 to 27 is subjected to etching.

31. The method for producing an electrode material for electrolytic capacitors as recited in claim 30, wherein at least a part of etching is a direct current etching.

32. An aluminum electrolytic capacitor wherein as electrode material, an aluminum electrode material produced by the production method as recited in claim 30 or 31 is used.
